# EUROPEAN PATENT APPLICATION

(11) **EP 3 842 506 A1**
(43) Date of publication of application: **30.06.2021**
(21) Application number: 19219299.5
(22) Date of filing: 23.12.2019
(51) Int. Cl.: C09K 11/77

(54) **COMPOSITION OF SUBMICRON CRYSTALS WITH ENHANCED UP-CONVERSION LUMINESCENCE**

(71) Applicant: Karlsruher Institut für Technologie, 76131 Karlsruhe (DE)
(72) Inventor: Turshatov, Andrey, 64347 Griesheim (DE); Busko, Dmitry, 76646 Bruchsal (DE); Tuhin, Samanta, 712408 State- West Bengal (IN); Richards, Bryce, 76297 Stutensee-Blankenloch (DE); Howard, Ian, 76137 Karlsruhe (DE)
(74) Representative: Müller-Boré & Partner Patentanwälte PartG mbB

(57) **Abstract**

The present invention relates to a submicron MVO₄ composition (M is preferably Gd³⁺) doped with Yb³⁺, Rem and D for photoluminescence having the chemical formula GdVO₄:Yb³⁺,Rem,D, a method for producing said composition, and uses of said composition.

## Description

The present invention relates to a submicron MVO₄ composition doped with Yb³⁺, Rem and D for photoluminescence having the chemical formula MVO₄:Yb³⁺,Rem,D, a method for producing said composition, and uses of said composition.

Photoluminescence is the emission of photons from direct photoexcitation of any form of matter after the absorption of photons (electromagnetic radiation). The photoluminescence can include down-shifting or up-conversion processes. If the energy of the emitted photons is less than the energy of the absorbed photons, the photoluminescence is described as down-shifting process. Vice versa, photon up-conversion is an optical process in which photons with low energy are transformed inside some optical medium into photons with higher energy. The down-shifting and up-conversion process in solid host matrixes doped with ions of rare earth elements ("Rem") are based on emission of visible, near infrared (NIR) or infrared (IR) photons under excitation with visible, NIR or IR light.

Photoluminescent materials generally have unique properties, and thus differentiating up-conversion (UC) photonic markers based on their emission wavelength can be used for security marking and object sorting, such as anti-counterfeiting and plastic sorting. Tracer-based sorting (TBS) and tracer-based identification (TBI) are technologies in which materials are marked with photoluminescent, inert tracers - the photonic marker - and are then identified either in a high throughput conveyer-belt process or a simple screening device via the distinctive properties of their luminescence. To be applicable as photonic markers, materials should demonstrate several features, particularly a high photoluminescence quantum yield (PLQY > 0.5 %) at relatively low excitation intensity (I < 10 W/cm²); efficient production characteristics (not too many process steps); good biocompatibility; and small particle sizes as of production. In particular, for several applications the photonic markers should have a small size (diameter < 1 µm) if the markers are included in composition for ink-jet printing or need to be dispersed in a thin polymer layer (with a typical thickness of 1 to 5 µm).

Several different technologies are currently proposed that have relevance to both plastics recycling and anti-counterfeiting industries. The main option is to use a Fourier-transform infrared (FT-IR) spectroscopic technique for identification of the polymer type, as well as employing color recognition cameras to enable sorting of clear versus colored. As another technology for plastic recycling/sorting and anti-counterfeiting, there have been used systems which are based on the addition of a marker that, once standardized, would provide a unique identification of a specific resin type. Inorganic crystalline materials doped with Rem ions are examples of prospective photonic markers for plastic sorting and anti-counterfeiting.

As already outlined above, high PLQY is one of the key requirements for photonic markers. With high PLQY at relatively low excitation intensity, the level of doping concentration can be reduced significantly, resulting in reduction of production costs and reduction of the (negative) effects of the marker on the properties of marked materials.

In view of the above, the technical problem underlying the present invention is to provide a new composition for photoluminescence, which achieves a high photoluminescence quantum yield (PLQY) at low excitation intensity and, at the same time, has efficient production characteristics (not too many process steps), has stability at high temperatures, exhibits good biocompatibility, and has a small particle diameter (submicron) as of production.

The solution to the above technical problem is achieved by the embodiments characterized in the claims.

In particular, the present invention provides a submicron MVO₄ composition doped with Yb³⁺, Rem and D and having the chemical formula MVO₄:Yb³⁺,Rem,D
wherein M is at least one ion selected from Gd³⁺, Y³⁺, La³⁺ and Lu³⁺,
wherein Rem is at least one rare earth element ion selected from Ce³⁺, Dy³⁺, Er³⁺, Eu³⁺, Ho³⁺, Nd³⁺, Pr³⁺, Sm³⁺, Tb³⁺ and Tm³⁺,
wherein D is at least one metal ion selected from Zn²⁺, Mg²⁺, Ca²⁺ and Sr²⁺, and wherein, based on the total composition, the amount of Yb³⁺ is from 1.0 to 40 mol%, the amount of Rem is from 0.1 to 5.0 mol%, and the amount of D is from 5.0 to 25 mol%.

The composition of the present invention is a submicron composition, i.e. each of the particles (crystals) of the composition has a (maximum) diameter of less than 1 µm. According to a preferred embodiment, each of the particles (crystals) of the composition has a diameter of 0.5 µm or less, and most preferred 0.3 µm or less (such as e.g. about 0.2 µm). Such a small particle diameter advantageously does not worsen up-conversion photoluminescence quantum yield (UC PLQY) at relatively low excitation intensity (such as I < 10 W/cm²) and leads to increased brightness of up-conversion luminescence if the particles are imbedded to a polymer matrix for polymer sorting or security application. The particle diameter, i.e. the maximum diameter of a particle, can e.g. be determined by Scanning Electron Microscopy (SEM) and/or Dynamic Light Scattering (DLS). Compositions of the present invention having such small particle diameter can be efficiently prepared e.g. by the method of the present invention described in detail below.

The composition for photoluminescence of the present invention has a host matrix of the chemical formula MVO₄ which is doped with Yb³⁺, Rem (ions) and D (ions). The composition of the present invention is represented by the chemical formula MVO₄:Yb³⁺,Rem,D.

In the above chemical formula MVO₄:Yb³⁺,Rem,D, the ions M³⁺ are the host-forming ions of the composition of the present invention. The M³⁺ ions are at least one ion selected from Gd³⁺, Y³⁺, La³⁺ and Lu³⁺. The M³⁺ ions in the above chemical formula may either be a mixture of one or more of the aforementioned M³⁺ ions, or the M³⁺ ions may only be one single element ions. According to a preferred embodiment of the present invention, M is Gd³⁺.

In the above chemical formula MVO₄:Yb³⁺,Rem,D, the ions Yb³⁺ are one of the photoactive elements of the composition of the present invention. Moreover, since Yb³⁺ ions partially substitute the M³⁺ ions in the composition, Yb³⁺ ions also partially act as host-forming elements of the composition.

In the above formula MVO₄:Yb³⁺,Rem,D, Rem is at least one rare earth element ion selected from Ce³⁺, Dy³⁺, Er³⁺, Eu³⁺, Ho³⁺, Nd³⁺, Pr³⁺, Sm³⁺, Tb³⁺ and Tm³⁺. Rem ions are also one of the photoactive elements of the composition of the present invention. Moreover, since Rem ions partially substitute the M³⁺ ions in the composition, Rem ions also partially act as host-forming elements of the composition. The Rem (ions) in the above chemical formula may either be a mixture of one or more of the aforementioned Rem (ions), or the Rem (ions) may only be one single element ions. According to a preferred embodiment of the present invention, Rem is at least one rare earth element ion selected from Er³⁺, Ho³⁺ and Tm³⁺. According to a particularly preferred embodiment, Rem is Tm³⁺.

In the above formula MVO₄:Yb³⁺,Rem,D, D is at least one metal ion selected from Zn²⁺, Mg²⁺, Ca²⁺ and Sr²⁺. D ions are co-dopants which advantageously increase up-conversion photoluminescence quantum yield (UC PLQY) of the composition of the present invention to PLQY > 0.5 % at relatively low excitation intensity such as I < 10 W/cm². Moreover, since D ions partially substitute the M³⁺ ions in the composition, D ions also partially act as host-forming elements of the composition. The D (ions) in the above chemical formula may either be a mixture of one or more of the aforementioned D (ions), or the D (ions) may only be one single element ions. According to a preferred embodiment of the present invention, D is Zn²⁺.

In the composition of the present invention, the (doping) amount of Yb³⁺ is from 1.0 to 40 mol%, based on the total composition. That is, 1.0 to 40 mol% of the M³⁺ ions of the host matrix MVO₄ are substituted by Yb³⁺ ions. According to a preferred embodiment of the present invention, the amount of Yb³⁺ is from 2.0 to 8.0 mol%, more preferred 3.0 to 7.0 mol%, more preferred from 4.0 to 6.0 mol%, and most preferred from 4.5 to 5.5 mol%. If the amount of Yb³⁺ is below 1.0 mol%, the composition of the present invention may not absorb enough light. If the amount of Yb³⁺ is above 40 mol%, there is a possibility of formation of several other crystalline phases that may reduce UC PLQY.

According to an alternatively preferred embodiment, particularly in case the composition of the present invention is embedded into a polymer matrix, the amount of Yb³⁺ is from 15 to 35 mol% in order to achieve a higher brightness (combination of absorption and PLQY), more preferred from 20 to 30 mol%. The polymer matrix is not particularly limited and any polymer matrix commonly used by a person skilled in the art can be used, such as e.g. polymer matrices composed of polyethylene, polystyrene, polyethers, polyurethanes, silicone resins, epoxides, etc.

In the composition of the present invention, the (doping) amount of Rem is from 0.1 to 5.0 mol%, based on the total composition. That is, 0.1 to 5.0 mol% of the M³⁺ ions of the host matrix MVO₄ are substituted by Rem ions. According to a preferred embodiment of the present invention, particularly in case Rem is Tm³⁺ and/or Ho³⁺, the amount of Rem is from 0.1 to 1.0 mol%, more preferred 0.2 to 0.7 mol%, more preferred from 0.3 to 0.5 mol%, and most preferred from 0.35 to 0.45 mol%. If the amount of Rem is too high, cross-relaxation processes may reduce UC PLQY.

According to an alternatively preferred embodiment of the present invention, particularly in case Rem is Er³⁺, the amount of Rem is from 0.5 to 4.0 mol%, more preferred from 0.75 to 3.5 mol%, and most preferred from 1.0 to 3.0 mol%.

In the composition of the present invention, the (doping) amount of D is from 5.0 to 25 mol%, based on the total composition. That is, 5.0 to 25 mol% of the M³⁺ ions of the host matrix MVO₄ are substituted by D ions. According to a preferred embodiment of the present invention, the amount of D is from 7.0 to 20 mol%, more preferred from 8.5 to 13 mol%, and most preferred from 9.0 to 11 mol%. If the amount of D is too low, enhancement of photoluminescence may not be observed. If the amount of D is too high, there is a possibility of formation of several other crystalline phases that reduce UC PLQY.

According to a particularly preferred embodiment of the present invention, the composition of the present invention is a GdVO₄ composition doped with Yb³⁺, Tm³⁺ and Zn²⁺ and has the chemical formula GdVO₄:Yb³⁺,Tm³⁺,Zn²⁺, wherein the (preferred) amounts of Yb³⁺, Tm³⁺ and Zn²⁺ are as indicated above.

The method for producing the composition for photoluminescence of the present invention is a co-precipitation method, since small particle diameters can be reliably achieved by such method. The co-precipitation method for producing the composition of the present invention comprises the steps of:
providing a first solution comprising a M-source, a Yb-source, a Rem-source and a D-source;
providing a second solution comprising a V-source;
mixing the first solution, the second solution and a water-soluble polymer or an organic ligand, thereby forming a precipitate;
separating and drying the precipitate; and
calcining the precipitate to obtain the MVO₄ composition doped with Yb³⁺, Rem and D.

The above method of the present invention can be used to produce the composition of the present invention. Accordingly, the explanations provided above with respect to the composition of the present invention also apply for the method of the present invention.

In the first step of the above method, there is provided first solution comprising a M-source (M³⁺-source), a Yb-source (Yb³⁺-source), a Rem-source (Rem³⁺-source) and a D-source (D²⁺-source), wherein M, Rem and D are the same as defined above with respect to the composition of the present invention. The M-source (M³⁺-source), Yb-source (Yb³⁺-source), Rem-source (Rem³⁺-source) and D-source (D²⁺-source) are mixed in the stoichiometric ratio which is desired for the to be obtained composition of the present invention. According to a preferred embodiment, the solvent of the first solution is water.

The M-source (M³⁺-source) of the present invention is not particularly limited, and any source which can provide M³⁺ ions for the composition of the present invention and can be dissolved in the solvent can be used. The M-source can be one specific compound or a mixture of two or more compounds. According to a preferred embodiment of the present invention, the M-source is an M-nitrate, an M-acetate or an M-chloride. According to a particularly preferred embodiment, the M-source is an M-nitrate, most preferred Gd(NO₃)₃.

The Yb-source (Yb³⁺-source) of the present invention is not particularly limited, and any source which can provide Yb³⁺ ions for the composition of the present invention and can be dissolved in the solvent can be used. The Yb-source can be one specific compound or a mixture of two or more compounds. According to a preferred embodiment of the present invention, the Yb-source is a Yb-nitrate, a Yb-acetate or a Yb-chloride, According to a particularly preferred embodiment, the Yb-source is Yb(NO₃)₃.

The Rem-source (Rem³⁺-source) of the present invention is not particularly limited, and any source which can provide Rem³⁺ ions for the composition of the present invention and can be dissolved in the solvent can be used, such as Rem nitrates, Rem acetates or Rem chlorides. According to a preferred embodiment, the Rem-source is a Rem nitrate, such as e.g. Er(NO₃)₃, Ho(NO₃)₃, or Tm(NO₃)₃. The Rem-source can be one specific compound or a mixture of two or more compounds. According to a preferred embodiment of the present invention, the Rem-source is Tm(NO₃)₃.

The D-source (D²⁺-source) of the present invention is not particularly limited, and any source which can provide D²⁺ ions for the composition of the present invention and can be dissolved in the solvent can be used, such as D nitrates, D acetates or D chlorides. According to a preferred embodiment, the D-source is a D chloride, such as e.g. ZnCl₂, MgCl₂, or SrCl₂. The D-source can be one specific compound or a mixture of two or more compounds. According to a preferred embodiment of the present invention, the D-source is ZnCl₂.

In the method of the present invention, there is further provided a second solution comprising a V-source (VO₄³⁻-source). The V-source of the present invention is not particularly limited, and any source which can provide VO₄³⁻ ions for the composition of the present invention and can be dissolved in the solvent can be used. The V-source can be one specific compound or a mixture of two or more compounds. According to a preferred embodiment of the present invention, the V-source is Na₃VO₄ or (NH₄)₃VO₄, most preferred Na₃VO₄. The V-source is dissolved in a concentration that is suitable to obtain the stoichiometric ratio for the to be obtained composition of the present invention. According to a preferred embodiment, the solvent of the second solution is water.

According to a particular preferred embodiment of the present invention, the M-source is M(NO₃)₃ (most preferred; Gd(NO₃)₃), the Yb-source is Yb(NO₃)₃, the Rem-source is Rem(NO₃)₃ (most preferred: Tm(NO₃)₃), the D-source is a chloride of D (most preferred: ZnCl₂), and the V-source is Na₃VO₄.

In the next step of the method of the present invention, the first solution, the second solution and and a water-soluble polymer or an organic ligand are mixed to thereby form a precipitate. The presence of the water-soluble polymer or the organic ligand helps to control the size of the composition particles. According to a preferred embodiment, the water-soluble polymer is polyvinylpyrrolidone, polyethylene glycol or polyethyleneimine, most preferred polyvinylpyrrolidone. According to a preferred embodiment, the organic ligand is ethylene diamine tetraacetic acid (EDTA). Typically, per 1 mmol of M³⁺ (such as e.g. Gd(NO₃)₃), 0.001 g to 0.15 g of water-soluble polymer (such as e.g. polyvinylpyrrolidone) or organic ligand are admixed, which ensures that the particle diameter of the composition is from about 200 nm to about 1000 nm, depending on the optimal size for the respective application.

In the next step of the method of the present invention, the precipitate is separated and dried. Any separation means (e.g. filtration) and drying means (e.g. drying oven) known to the person skilled in the art can be used.

The composition after precipitation usually displays pure crystallinity with a large number of structural defects, which quench photoluminescence. Therefore, in the next step of the method of the present invention, the (separated and dried) precipitate is calcined to obtain the composition of the present invention, i.e. the MVO₄ composition doped with Yb³⁺, Rem and D and having the chemical formula MVO₄:Yb³⁺,Rem,D. According to a preferred embodiment of the present invention, calcining the precipitate is carried out at a temperature of from 750 °C to 950°C for 1 to 3 hours, more preferred at a temperature of from 800 °C to 900 °C for 1.5 to 2.5 hours. The calcination treatment improves the crystallinity of the composition and removes the water-soluble polymer (e.g. polyvinylpyrrolidone) or the organic ligand. If the temperature is too low and/or the calcination time is too short, the structural defects may not disappear. If the temperature is too high, sintering of the submicron particles may occur, leading to a significantly larger size and size distribution.

In a further aspect, the present invention provides the use of the composition of the present invention for (plastic) sorting or as photonic marker in anti-counterfeiting or for quality control.

In particular, the composition for photoluminescence of the present invention can be used for sorting objects or materials like plastics. The composition of the present invention may be incorporated into any material or object, and said marked material or object may then be (automatically) separated from a mixture of various materials or objects (in a suitable device/machine) after the material which contains the composition of the present invention has been identified by a spectrophotometric analysis. The term "incorporated" is to be understood in a broad sense and covers not only the incorporation of the composition into the bulk of a material or object but also the incorporation into a carrier that is attached to a material or object. Suitable carriers can be adhesive labels, tags, stickers or the like.

According to another embodiment, the composition for photoluminescence of the present invention can used be as an anti-counterfeiting (photonic) marker. In particular, the composition of the present invention may be incorporated into an object or material as a marker, which object or material may then be identified by a spectrophotometric analysis so as to determine the presence or absence of the marker, thereby determining whether the object or material is authentic or not.

According to another embodiment, the composition for photoluminescence of the present invention may be incorporated into an object or material as a marker for quality control or formulation control. For example, this allows to control the presence and/or amount of a marked component in a mixture of components or in a manufactured material or object.

Due to the co-doping of the composition of the present invention with D ions and due to the small particle diameter of each of the particles of the composition, the composition of the present invention advantageously achieves an increased intensity of near-infrared luminescence emission at low excitation intensity and has stability at high temperatures. Due to the specific production method of the present invention, the obtained composition of the present invention has a small particle diameter of less than 1 µm as of production. Therefore, the composition of the present invention can advantageously be used for (plastic) sorting and as an anti-counterfeiting marker, particularly in applications tin which photonic markers should have a small size (diameter < 1 µm), e.g. in case the markers are included in composition for ink-jet printing or need to be dispersed in a thin polymer layer (with typical thickness of 1 to 5 µm).

The Figures show:
Figure 1 shows an XRD spectrum of the composition of Example 1.
Figure 2 shows a Scanning Electron Microscopy (SEM) picture of the composition of Example 1.
Figure 3 shows the up-conversion (UC) emission spectra of the compositions of Example 1 and Comparative Example 1.
Figure 4 shows the up-conversion (UC) emission spectra of the compositions of Example 1 and Comparative Example 2.

The present invention will be further illustrated in the following examples without being limited thereto.

### Examples

### Comparative Example 1:

GdVO₄:5 mol% Yb³⁺, 0.3 mol% Tm³⁺,10 mol% Zn²⁺ is prepared via the typical solid state reaction at high temperature:

Gd₂O₃(xYb₂O₃, yTm₂O₃, zZnO) + V₂O₃ → 2 GdVO₄:Yb³⁺,Tm³⁺,Zn²⁺

The synthesis was performed on the lab scale (up to 5 gram of GdVO₄ were synthesized).

Due to the high temperature solid state reaction, the solid state process yields large crystals with maximum particle diameters between 10 and 20 µm.

### Example 1:

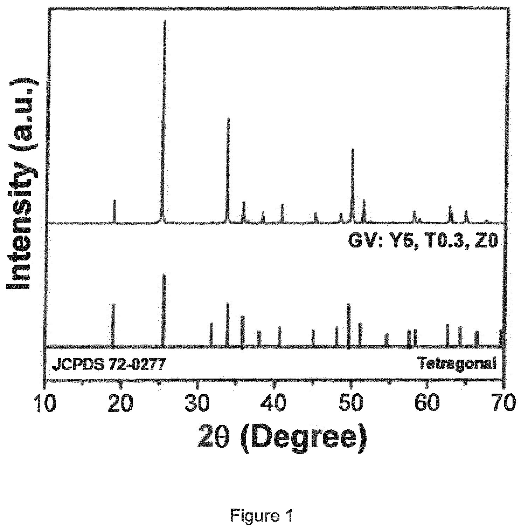

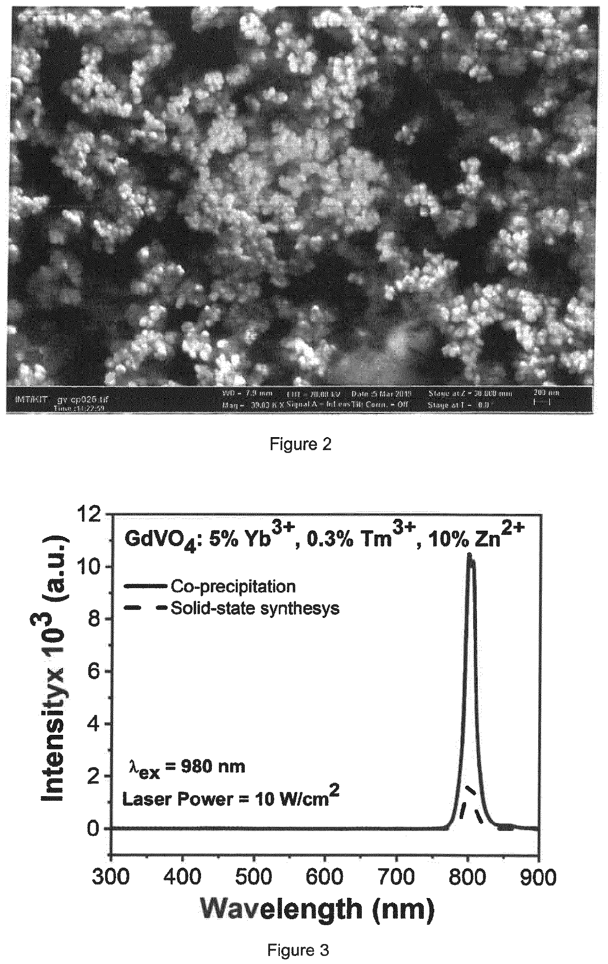

An aqueous first solution comprising Gd(NO₃)₃ in a concentration of 0.06776 mol/L, Yb(NO₃)₃ in a concentration of 0.004 mol/L, Tm(NO₃)₃ in a concentration of 0.00024 mol/L, and ZnCl₂ in a concentration of 0.008 mol/L is prepared. An aqueous second solution comprising Na₃VO₄ in a concentration of 0.08 mol/L is prepared. 50 mL of the first solution, 50 mL of the second solution and polyvinylpyrrolidone (concentration 10 g/L) are mixed, whereby one gram of precipitate is formed. The precipitate is filtered off and dried in an electrical oven at 60 °C. After that, the precipitate is calcined at 850 °C for 2 hours to obtain a submicron GdVO₄ composition doped with Yb³⁺, Rem and D and having the chemical formula GdVO₄:5 mol% Yb³⁺, 0.3 mol% Tm³⁺,10 mol% Zn²⁺. Figure 1 shows an XRD spectrum of the obtained composition and displays the tetragonal structure of GdVO₄. Figure 2 shows a Scanning Electron Microscopy (SEM) picture of the obtained composition and shows a narrow size distribution of marker particles with a maximum particle diameter of each of the crystals of about 0.2 µm.

Figure 3 shows the up-conversion (UC) emission spectra of the compositions of Example 1 ("co-precipitation") and Comparative Example 1 ("solid-state synthesis") from 300 to 900 nm upon excitation with a 980 nm laser at an excitation intensity of 10 W/cm². The composition obtained via co-precipitation (Example 1) shows a significantly enhanced UC PLQY of 0.9 % at a near infrared wavelength of 800nm when compared to the composition obtained via sold-state reaction.

### Comparative Example 2:

The composition of Comparative Example 2 is prepared similar to the composition of Example 1, except that no ZnCl₂ is present in the first solution.

The obtained composition is a submicron GdVO₄ composition doped with Yb³⁺ and Rem and has the chemical formula GdVO₄:5 mol% Yb³⁺, 0.3 mol% Tm³⁺. The particle size is about 200 nm.

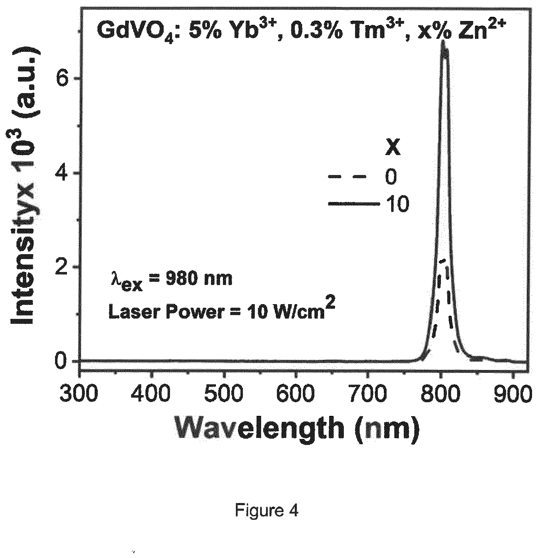

Figure 4 shows the up-conversion (UC) emission spectra of the compositions of Example 1 (x = 10 mol% Zn²⁺) and Comparative Example 2 (x = 0 mol% Zn²⁺) from 300 to 900 nm upon excitation with a 980 nm laser at an excitation intensity of 10 W/cm². The composition co-doped with Zn²⁺ (Example 1) shows a 200 % enhancement of UC luminescence when compared to the composition without Zn²⁺ co-doping. The value of UC PLQY increases to about 0.9 %.

## Claims

1. A submicron MVO₄ composition doped with Yb³⁺, Rem and D and having the chemical formula MVO₄:Yb³⁺,Rem,D
wherein M is at least one ion selected from Gd³⁺, Y³⁺, La³⁺ and Lu³⁺,
wherein Rem is at least one rare earth element ion selected from Ce³⁺, Dy³⁺, Er³⁺, Eu³⁺, Ho³⁺, Nd³⁺, Pr³⁺, Sm³⁺, Tb³⁺ and Tm³⁺,
wherein D is at least one metal ion selected from Zn²⁺, Mg²⁺, Ca²⁺ and Sr²⁺, and wherein, based on the total composition, the amount of Yb³⁺ is from 1.0 to 40 mol%, the amount of Rem is from 0.1 to 5.0 mol%, and the amount of D is from 5.0 to 25 mol%.

2. The submicron MVO₄ composition according to claim 1, wherein M is Gd³⁺.

3. The submicron MVO₄ composition according to claim 1 or 2, wherein Rem is at least one rare earth element ion selected from Er³⁺, Ho³⁺ and Tm³⁺.

4. The submicron MVO₄ composition according to claim 3, wherein Rem is Tm³⁺.

5. The submicron MVO₄ composition according to any one of claims 1 to 4, wherein D is Zn³⁺.

6. The submicron MVO₄ composition according to any one of claims 1 to 5, wherein the amount of Yb³⁺ is from 3.0 to 7.0 mol%.

7. The submicron MVO₄ composition according to any one of claims 1 to 6, wherein the amount of Rem is from 0.3 to 0.5 mol%.

8. The submicron MVO₄ composition according to any one of claims 1 to 7, wherein the amount of D is from 8.5 to 13 mol%.

9. The submicron MVO₄ composition according to any one of claims 1 to 8, wherein each of the particles (crystals) of the composition has a diameter of 0.5 µm or less.

10. A method for producing the submicron MVO₄ composition doped with Yb³⁺, Rem and D according to any one of claims 1 to 9, comprising:
providing a first solution comprising a M-source, a Yb-source, a Rem-source and a D-source;
providing a second solution comprising a V-source;
mixing the first solution, the second solution and a water-soluble polymer or an organic ligand, thereby forming a precipitate;
separating and drying the precipitate; and
calcining the precipitate to obtain the submicron MVO₄ composition doped with Yb³⁺, Rem and D.

11. The method according to claim 10, wherein the M-source is Gd(NO₃)₃, the Yb-source is Yb(NO₃)₃, the Rem-source is Rem(NO₃)₃, the D-source is a chloride of D, and the V-source is Na₃VO₄.

12. The method according to claim 10 or 11, wherein calcining the precipitate is carried out at a temperature of from 750 °C to 950°C for 1 to 3 hours.

13. The method according to any one of claims 10 to 12, wherein polyvinylpyrrolidone is used as the water-soluble polymer.

14. Use of the submicron MVO₄ composition according to any one of claims 1 to 9 for sorting or as photonic marker in anti-counterfeiting or for quality control.
